Europäisches Patentamt

European Patent Office

Office européen des brevets

(11) Veröffentlichungsnummer: **0 212 421**
**A2**

(12) **EUROPÄISCHE PATENTANMELDUNG**

(21) Anmeldenummer: 86110774.6

(22) Anmeldetag: 04.08.86

(51) Int. Cl.⁴: **F16J 10/02**

(30) Priorität: 16.08.85 DE 3529351

(43) Veröffentlichungstag der Anmeldung:
04.03.87 Patentblatt 87/10

(84) Benannte Vertragsstaaten:
AT CH DE FR GB IT LI SE

(71) Anmelder: **KNORR-BREMSE AG**
**Moosacher Strasse 80 Postfach 401060**
**D-8000 München 40(DE)**

(72) Erfinder: **Wiedmann, Hans Peter, Dr.**
**Prochintalstrasse 44**
**D-8000 München 50(DE)**

(54) Druckmittelbeaufschlagbarer Zylinder.

(57) Der Zylinder weist ein im Zylinderrohr 6 mit im wesentlichen ovalen Innenquerschnitt auf. Im dem großen Krümmungsradius des Innenquerschnittes zugehörenden Mantelabschnitts 7 des Zylinderrohres 6 ist wenigstens ein parallel zur Zylinderachse 2 verlaufender Kanal 8a, 8b angeordnet. Der Kanal 8a, 8b kann der Druckmittelführung und/oder dem Unterbringen von die Kolbenstellung abtastenden Schaltelementen dienen.

Fig. 4

EP 0 212 421 A2

## Druckmittelbeaufschlagbarer Zylinder

Die Erfindung betrifft einen druckmittelbeaufschlagbaren Zylinder, in dessen einen im wesentlichen ovalen Innenquerschnitt aufweisendem Zylinderrohr ein diesem angepaßter Kolben abgedichtet verschieblich ist.

Ein derartiger Zylinder ist aus der DE-OS 28 28 344 bekannt. Der bekannte Zylinder weist eine gegen Verdrehungen gut gesicherte Führung des Kolbens relativ zum Zylinder auf. Der Kolben überragt zylinderbodenabgewandt die Zylinderwandung und ist an seinem aus dem Zylinder herausragenden Ende mit dem Kolbenboden versehen, wobei der Kolbenboden zugleich der Kraftabgabe dient. Der bekannte Zylinder ist nur einfachwirkend betreibbar.

Es ist Aufgabe der Erfindung, einen Zylinder der eingangs genannten Art derart auszubilden, daß er bei einfacher und billiger Fertigungsmöglichkeit wenigstens einen Längskanal bietet, welcher der Druckmittelführung oder der geschützten Unterbringung von Schaltelementen dienen kann, so daß bei beibehaltener, guter Drehführung des Kolbens relativ zum Zylinder dieser eine weite Anwendbarkeit erhält.

Diese Aufgabe wird nach der Erfindung dadurch gelöst, daß in dem wenigstens einen einen großen Krümmungsradius des Innenquerschnittes zugehörenden Mantelabschnitt des Zylinderrohres wenigstens ein parallel zur Zylinderachse verlaufender Kanal angeordnet ist.

Die nach der weiteren Erfindung vorteilhafte, weitere Ausgestaltung des Zylinders ist den Unteransprüchen entnehmbar.

In der Zeichnung sind Ausführungsbeispiele für nach der Erfindung ausgebildete Zylinder dargestellt, und zwar zeigt

Figur 1 eine Grundform des Innenquerschnittes des Zylinderrohres,

Figur 2 eine aus Dichtungsgründen für den Kolben abgewandelte Grundform,

Figur 3, 4 und 5 jeweils einen Querschnitt durch unterschiedliche Ausführungsformen des Zylinderrohres und

Figur 6 eine Ansicht des Zylinders.

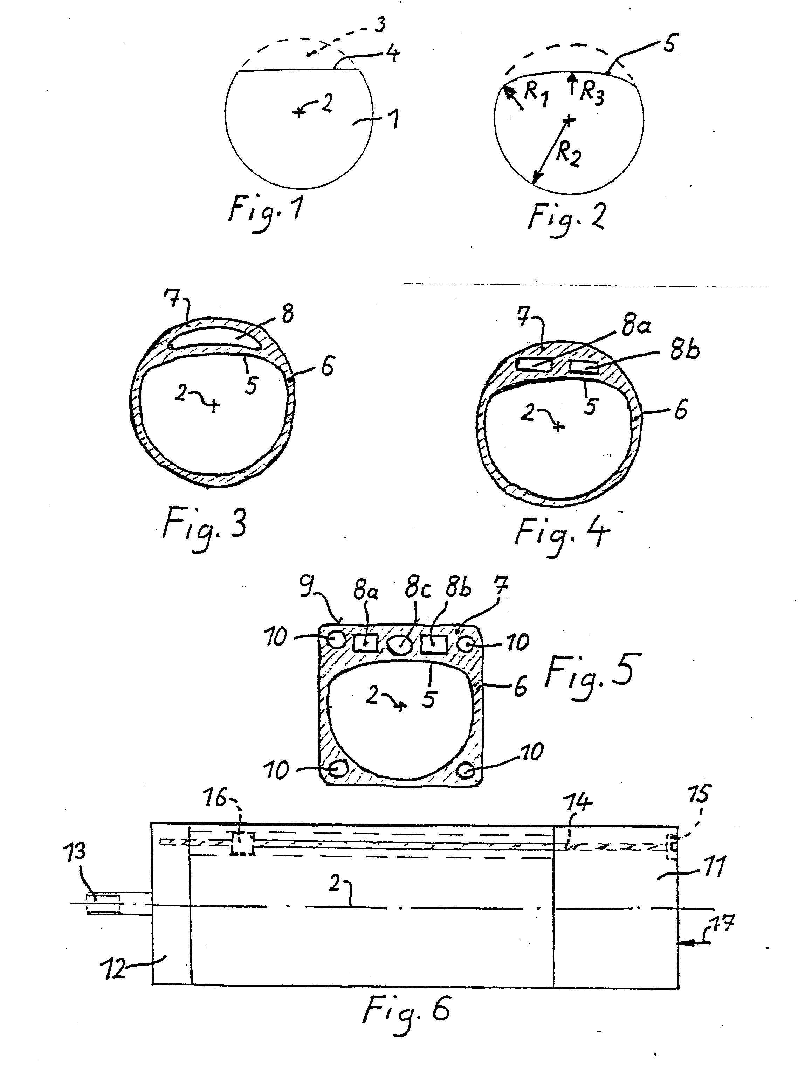

Aus Fig.1 ist ersichtlich, daß die Grundform des Innenquerschnittes 1 des Zylinderrohres kreisförmig um die Zylinderachse 2 ist, wobei ein Kreisabschnitt 3 durch eine Sehne 4 abgeschnitten ist. Bei dieser Grundform ergäben sich jedoch in den Ecken zwischen dem Kreisbogen und der Sehne Dichtungsschwierigkeiten für den Kolben, so daß es zweckmäßiger ist, einen Innenquerschnitt gemäß Fig.2 vorzusehen, in welchen die Ecken mit einem kleinen Krümmungsradius R1 gerundet und somit scharfkantige Übergänge an der Zylinderinnenwandung vermieden sind. Dabei ist es weiterhin zweckmäßig, die der Sehne 4 entsprechende Wandung schwach nach außen gewölbt auszubilden, wodurch sie einen Kreisradius R3 erhält. Der Innenquerschnitt des Zylinderrohres weist somit unterschiedliche Krümmungen auf, nämlich seine eigentliche Zylinderkrümmung mit dem Kreisradius R2, und an diese mit den kleinen Krümmungsradien R1 anschließend einen Abschnitt 5 mit großem Krümmungsradius R3.

In den unterschiedlichen Zylinderrohren nach den Fig. 3,4,5 ist jeweils ein der Fig.2 entsprechender Innenquerschnitt vorgesehen. Nach Fig.3 verläuft im den Abschnitt 5 aufweisenden Mantelabschnitt 7 des Zylinderrohres 6 ein im Querschnitt etwa sichelförmiger Kanal 8, beim Ausführungsbeispiel nach Fig.4 ist dieser Kanal in zwei im Querschnitt etwa rechteckige, nebeneinander verlaufende Kanäle 8a und 8b unterteilt. Die Kanäle 8, 8a und 8b verlaufen parallel zur Zylinderachse 2. Nach Fig.5 weist das Zylinderrohr 6 einen etwa quadratischen Außenumfang auf, und zwei etwa rechteckige Kanäle 8a und 8b sowie ein zwischen diesen angeordneter, im Querschnitt runder Kanal 8c verlaufen ebenfalls im den Abschnitt 5 aufweisenden, andererseits von einer Quadratseite 9 begrenzten Mantelabschnitt 7. Weiterhin sind beim Ausführungsbeispiel nach Fig.5 nahe der Quadratecken im Zylinderrohr zur Zylinderachse 2 parallel verlaufende Ausnehmungen 10 vorgesehen, welche der Aufnahme von Halteschrauben für die an das Zylinderrohr 6 anzusetzenden Zylinderköpfen dienen.

Aus den Fig.3 bis 5 ist ersichtlich, daß durch die Anordnung der Kanäle 8, 8a und 8b bzw. 8a, 8b und 8c das Zylinderrohr 6 nahezu an allen Stellen eine nahezu gleiche Wandstärke erhält, wodurch die Fertigung des Zylinderrohres 6 wesentlich erleichtert wird. Es ist zweckmäßig, das Zylinderrohr 6 im Strangpreßverfahren oder einem entsprechenden Verfahren herzustellen. Abweichend hierzu kann es auch zweckmäßig sein, das Zylinderrohr aus Kunststoff extrudiert herzustellen und in nicht dargestellter Weise mit einem dünnen Metallmantel, vorzugsweise Stahlrohr, zu ummanteln.

Die Kanäle 8,8a,8b und 8c können der Druckmittelführung längs des Zylinderrohres 6 dienen, insbesondere ist es bei doppeltwirkender Ausbildung des Zylinders zweckmäßig, an nur einem der Zylinderdeckel Druckmittelanschlüsse vorzusehen, deren einer in den an den Zylinderdeckel anschließenden Innenraum des Zylinderrohres 6 und deren anderer in einen der erwähnten Kanäle mündet. Durch den Kanal wird das Druckmittel dem anderen Zylinderdeckel zugeführt, durch welchen es in den an diesen anschließenden Innenraum des Zylinderrohres 6 gelangt. Andererseits können in den Kanälen 8, 8a, 8b und 8c auch Schaltmittel untergebracht werden, welche in Abhängigkeit von der Kolbenstellung berührungsfrei schalten und welche der Beaufschlagungssteuerung des Zylinders dienen. Hierzu können beispielsweise Reed-Schalter verwendet werden. Es ist zweckmäßig, bei den Ausführungen nach Fig.4 und Fig.5 die Druckmittelführung und die Unterbringung der Schaltelemente voneinander getrennten Kanälen 8a, 8b bzw. 8c zuzuordnen.

Zum einfachen Justieren der Schaltelemente kann zweckmäßig eine Anordnung nach Fig.6 vorgesehen werden. Nach Fig.6 sind beiderseits an das Zylinderrohr 6 Zylinderdeckel 11 bzw. 12 angesetzt und beispielsweise durch die Ausnehmungen 10 nach Fig.5 durchsetzende, nicht gezeigte Halteschrauben verspannt. Der Zylinderdeckel 12 ist verschieblich von der Kolbenstange 13 durchsetzt. Es ist eine Gewindespindel 14 vorgesehen, die drehbar, aber axial unverschieblich in den Zylinderdeckeln 11 und 12 gelagert ist, wenigstens einen, gemäß Fig.6 den rechten Zylinderdeckel 11, durchragt und mit einem Schraubenkopf 15 endet, so daß sie von außen leicht drehbar ist. Die Gewindespindel 14 durchragt einen der Kanäle 8,8a,8b oder 8c und ist in diesem Kanal mit einer undrehbar, aber axial verschieblich geführten Mutter 16 verschraubt. Die nicht gezeigte Schaltvorrichtung ist mit der Mutter 16 verbunden bzw. in diese integriert. Es ist zweckmäßig, wenn der von der Gewindespindel 14 durchragte Kanal einen unrunden Querschnitt aufweist, wodurch sich in einfacher Weise eine undrehbare Führung für die Mutter 16 ergibt. Durch Drehen des Schraubenkopfes 15 ist die Mutter 16 und damit das Schaltelement trotz völlig geschützter Anordnung von außen einfach justierbar. Bei der Ausführung nach Fig.5 können zweckmäßig zwei derartige Justiereinrichtungen für zwei Schaltelemente vorgesehen sein, so daß in zwei justierbaren Stellungen des Kolbens Schaltsignale abgegeben werden. Der Kanal 8c dient dabei zweckmäßig der Druckmittelführung.

Bei der vorstehend beschriebenen Ausführung ist es weiterhin zweckmäßig, im Zylinderdeckel 11 ein Steuerventil anzuordnen, welches die Druckmittelbeaufschlagung des unmittelbar an den Zylinderdeckel 11 angrenzenden Innenraumes des Zylinderrohres 6 und über den Kanal 8c und den Zylinderdeckel 12 auch die andersseitige Druckmittelbeaufschlagung des im Zylinderrohr 6 geführten Kolbens steuert. Der Zylinderdeckel 11 benötigt dann nur einen Rohranschluß 17. Falls das Steuerventil als Magnetventil ausgebildet wird, ist zu dem einen Rohranschluß 17 lediglich noch ein Kabelanschluß für die doppeltwirkende Zylinderausführung erforderlich.

Abweichend zu den vorstehend beschriebenen Ausführungen ist es natürlich auch möglich, den Innenquerschnitt des Zylinderrohres gegenüberliegend zum Abschnitt 5 gleichartig zu diesem abzuflachen, so daß der Innenquerschnitt einen ellipsenartigen Umriß erhält. Es sind dann beidseitig des Innenquerschnittes Kanäle im Zylinderrohr unterbringbar.

In wenigstens einem der Kanäle 8, 8a, 8b, 8c kann auch ein übliches Wegmeßsystem für die Kolbenbewegungen untergebracht werden.

Bezugszeichenliste

1 Innenquerschnitt
2 Zylinderachse
3 Kreisabschnitt
4 Sehne
5 Abschnitt
6 Zylinderrohr
7 Mantelabschnitt
8 Kanal
8a,8b,
8c Kanal
9 Quadratseite
10 Ausnehmung
11 Zylinderdeckel
12 Zylinderdeckel
13 Kolbenstange
14 Gewindespindel
15 Schraubenkopf
16 Mutter
17 Druckmittelanschluß
R1 Radius
R2 Kreisradius
R3 Krümmungsradius

## Ansprüche

1. Druckmittelbeaufschlagbarer Zylinder, in dessen einem im wesentlichen ovalen Innenquerschnitt (1) aufweisendem Zylinderrohr (6) ein diesem angepaßter Kolben abgedichtet verschieblich ist, dadurch gekennzeichnet, daß in dem wenigstens einen einen großen Krümmungsradius (R3) des Innenquerschnittes (1) zugehörenden Mantelabschnitt (7) des Zylinderrohres (6) wenigstens ein parallel zur Zylinderachse (2) verlaufender Kanal (8, 8a, 8b, 8c) angeordnet ist.

2. Zylinder nach Anspruch 1, dadurch gekennzeichnet, daß der Innenquerschnitt (1) des Zylinderrohres (6) einem Kreis mit einer einseitigen, den großen Krümmungsradius (R3) aufweisenden Abflachung entspricht.

3. Zylinder nach Anspruch 1 oder 2, dadurch gekennzeichnet, daß der Kanal (8) einen sichelförmigen Querschnitt aufweist.

4. Zylinder nach Anspruch 1 oder 2, dadurch gekennzeichnet, daß mehrere Kanäle (8a, 8b) mit etwa rechteckigem Querschnitt vorgesehen sind.

5. Zylinder nach Anspruch 2, 3 oder 4, dadurch gekennzeichnet, daß das Zylinderrohr (6) einen wenigstens annähernd kreisförmigen Außenumfang aufweist und daß der wenigstens eine Kanal (8, 8a, 8b) einen dem Zylinderrohr (6) an wenigstens nahezu allen Stellen eine annähernd gleiche Stärke belassenden Querschnitt aufweist (Figur 3,4).

6. Zylinder nach Anspruch 1 oder 2, dadurch gekennzeichnet, daß das Zylinderrohr (6) einen wenigstens annähernd quadratischen Außenumfang aufweist, wobei der wenigstens eine Bereich (Abschnitt 5) des Innenquerschnittes (1) mit großem Krümmungsradius einer Quadratseite (9) zugewandt ist und daß das Zylinderrohr (6) nahe seiner Quadratecken zur Zylinderachse (2) parallele Ausnehmungen (10) zur Aufnahme von Halteschrauben für die Zylinderköpfe (11,12) aufweist, wobei der wenigstens eine Kanal (8a,8b,8c) zwischen zwei dieser Ausnehmungen (10) verläuft (Fig.5,6).

7. Zylinder nach Anspruch 6, dadurch gekennzeichnet, daß der Innenquerschnitt des Zylinderrohres (6), die Ausnehmungen (10) und der wenigstens eine Kanal (8a,8b,8c) dem Zylinderrohr (6) an wenigstens nahezu allen Stellen eine wenigstens annähernd gleiche Stärke belassen.

8. Zylinder nach Anspruch 5 oder 7, dadurch gekennzeichnet, daß das Zylinderrohr (6) im Strangpreß-oder einem entsprechenden Verfahren hergestellt ist.

9. Zylinder nach einem oder mehreren der vorstehenden Ansprüche, dadurch gekennzeichnet, daß das Zylinderrohr aus Kunststoff extrudiert und mit einem Metall-, gegebenenfalls Stahlrohr ummantelt ist.

10. Zylinder nach einem oder mehreren der vorstehenden Ansprüche, dadurch gekennzeichnet, daß wenigstens ein Kanal (8,8a,8b,8c) ein Druckmittelführungskanal ist.

11. Zylinder nach Anspruch 10, dadurch gekennzeichnet, daß vom einen Zylinderdeckel (11) in den Druckmittelführungskanal (8,8a,8b,8c) einspeisbares Druckmittel durch den anderen Zylinderdeckel (12) in den Innenraum des Zylinderrohres (6) geführt wird.

12. Zylinder nach Anspruch 11, dadurch gekennzeichnet, daß im einen einen Druckmittelanschluß (17) aufweisenden Zylinderdeckel (11) ein Steuerventil zum Steuern der Druckmittelbeaufschlagung des an diesen einen Zylinderdeckel - (11) anschließenden Innenraumes des Zylinderrohres (6) und des Kanals (8,8a,8b,8c) angeordnet ist.

13. Zylinder nach einem oder mehreren der vorstehenden Ansprüche, dadurch gekennzeichnet, daß in wenigstens einem Kanal (8a, 8b) wenigstens ein in Abhängigkeit von der Kolbenstellung berührungsfrei schaltender Schalter angeordnet ist.

14. Zylinder nach Anspruch 13, dadurch gekennzeichnet, daß der Schalter mit einer drehfest geführten Mutter (16) verbunden ist, die mit einer den Kanal durchsetzenden, von außen drehbaren Gewindespindel (14) verschraubt ist.

Fig. 1

Fig. 2

Fig. 3

Fig. 4

Fig. 5

Fig. 6